## Europäisches Patentamt
## European Patent Office
## Office européen des brevets

(11) Publication number: **0 058 599**
**A1**

(12) # EUROPEAN PATENT APPLICATION

(21) Application number: **82400211.7**

(22) Date of filing: **05.02.82**

(51) Int. Cl.³: **B 62 D 25/02**
**B 62 D 35/00**

(30) Priority: **10.02.81 JP 19270/81**

(43) Date of publication of application:
**25.08.82 Bulletin 82/34**

(84) Designated Contracting States:
**DE FR GB IT**

(71) Applicant: **NISSAN MOTOR COMPANY, LIMITED**
**No.2, Takara-cho, Kanagawa-ku**
**Yokohama City(JP)**

(72) Inventor: **Sakamoto, Hikota**
**No 6-1, Daikoku-cho**
**Tsurumi-ku Yokohama-City(JP)**

(74) Representative: **Weinstein, Zinovi et al,**
**Cabinet Z. WEINSTEIN 20, Avenue de Friedland**
**F-75008 Paris(FR)**

(54) Spoiler for a vehicle door frame.

(57) A vehicle body has a door frame (8) cooperating with a front hinge pillar (3, 4, 6, 7). A spoiler (85) is mounted to the door frame (8) in a manner to project outward in the transverse direction of the vehicle body.

**FIG.2**

EP 0 058 599 A1

1

## Improvements in or relating to vehicle body

The present invention relates in general to vehicle bodies having a door frame cooperating with a hinge pillar and more particularly to improvements in or relating to the part of the vehicle body around the hinge pillar with a view to reducing wind whistle or wind noise produced at that part of the vehicle body when the vehicle is travelling at high speed.

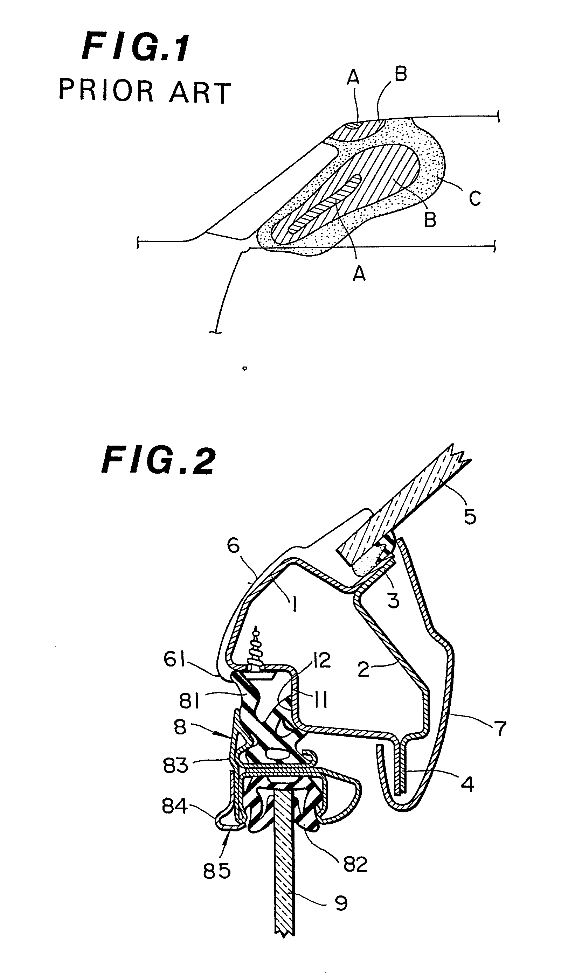

Figure 1 of the accompanied drawings shows a distribution of air pressure around a front hinge pillar of a typical prior art automotive vehicle upon travelling, wherein the front hinge pillar projects in part more outward in the transverse direction of the vehicle than a cooperating door frame positioned in rear of the front hinge pillar in the direction of travel and wherein the zones (A), (B) and (C) are so designated in the order of intensity of negative pressure, i.e., in decreasing order of absolute value of negative pressure. As seen from the illustrated air pressure distribution, there is caused at a location along and just in rear of the front hinge pillar the highest negative pressure zone (A) which coincides with the very place where a weatherstrip is arranged to provide a door seal. This leads to such problem that wind whistle or wind noise is likely to be caused by airflow through small cracks in the door seal, resulting from differential between the inside and outside air pressure.

It is an object of the present invention to provide a novel and improved vehicle body which is free from the foregoing problems inherent in the comparable prior art structure.

In accordance with the invention, there is provided a novel and improved vehicle body which comprises a hinge pillar and a door frame arranged side-by-side longitudinally of the vehicle body with the door frame positioned rearward of the hinge pillar, and a spoiler mounted to the door frame in a manner to project outward in the transverse direction of the vehicle body.

With the above structure, wind whistle or wind noise at the part of the vehicle body around the hinge pillar can be prevented or at least reduced to a negligible level. The vehicle body of the above mentioned character is enabled to prevent or at least reduce wind whistle or wind noise caused at a part of a vehicle body around a door frame cooperating with a hinge pillar.

The features and advantages of the vehicle body according to the present invention will become more clearly appreciated from the following description taken in conjunction with the accompanying drawings, in which :

Figure 1 is a view of a distribution of air pressure around a front hinge pillar of a typical prior art automotive vehicle upon travelling.

Figure 2 is a horizontal section of a vehicle body at a part thereof around a front hinge pillar and shows an embodiment of the present invention.

Figures 3 and 4 are views similar to Figure 2 but show modifications of the present invention ; and

Figure 5 is a view similar to Figure 1 but shows an example of an air pressure distribution attained by the present invention.

The present invention will hereinbelow be described with reference to the embodiments shown in the drawings wherein like reference numerals designate like parts throughout the several views thereof.

Figure 2 shows an embodiment of the present invention as being applied by way of example to a vehicle body at a part thereof around a windshield pillar or front hinge pillar. The front hinge pillar is shown as comprising a pillar inner member 1 and a pillar outer member 2 which are joined at 3 and 4 to form a closed section or configuration. A windshield 5 is placed on the forward joint 3 of the front hinge pillar and bonded thereto. The front hinge pillar further comprises a pillar molding 6 and a pillar garnish 7 respectively placed upon the pillar outer and inner members 1 and 2 to provide a refined appearance. The outer pillar member 1 has a stepped portion 11 which is shaped in relation to a door sash or frame 8 upon which a door weatherstrip 81 mounted to the periphery of the door frame 8 abuts to provide a door seal. The door frame 8 has also mounted thereon a window weatherstrip or resilient element 82 which guides and seals a window 9 which is slidably movable in known manner. The pillar molding 6 has an end 61 which forms the most outward portion of the front hinge pillar referred to the transverse direction of the vehicle and which is also located more outward than the outer surface 83 of the door frame 8. The above structure substantially follows the conventional fashion.

In accordance with the present invention, a spoiler 85 is mounted to the rear end portion of the door frame 8 referred to the direction of travel. The spoiler 85 is made from a suitable material such as metal or synthetic resinous material and shaped and arranged to define a protrusion 84 which projects transversely of the vehicle more outward than the projecting end 61 of the pillar molding 6. In order to carry out the present invention effectively, it is important that the protrusion 84 is positioned in rear of the place 12 where the door weatherstrip 81 is brought into abutting engagement with the stepped portion 11. The spoiler 85 is formed independent from the door frame 8 and constructed and arranged to provide a molding-like appearance.

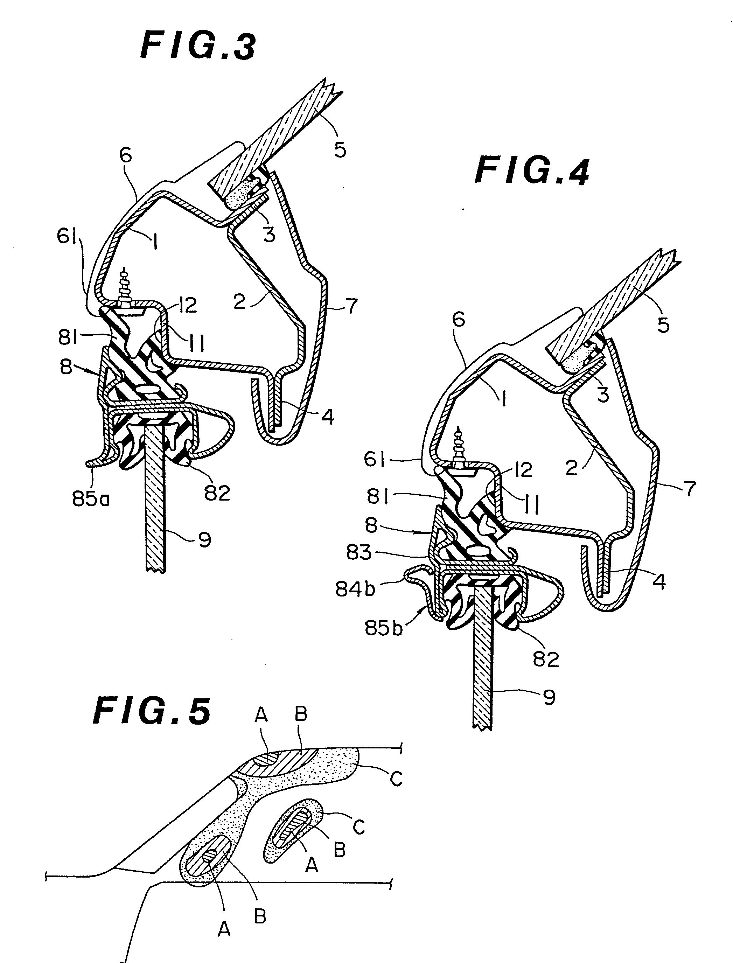

Figure 3 shows a modified embodiment of the present invention. The embodiment of Figure 3 is substantially similar to the previous embodiment except that a spoiler 85a is formed integral with the door frame 8.

Figure 4 shows a further modified embodiment of the present invention. The embodiment of Figure 4 is substantially similar to the previous embodiments except that a spoiler 85b is formed as a molding-like independent member having a protrusion 84b arranged at substantially the middle of the door frame 8 referred to the longitudinal direction of the vehicle.

Referring to Figure 5, by the effect of the spoiler, the highest negative pressure zone (A) at the region just behind the front hinge pillar is considerably reduced and mostly moved to the region on the door window as will be understood when making a comparison between the pressure distribution of Figure 1 and that of Figure 5. The airflow through the cracks in the door seal is therefore prevented or at least considerably reduced with the result that wind whistle or wind noise is prevented or at least reduced to a negligible level.

In the foregoing, it is to be understood that the shape and arrangement of the spoiler is determined suitably depending upon the shape of each automotive vehicle to which it is applied. Further, it is not always necessary to provide the spoiler to the overall length of the door frame but the spoiler may be provided to part of the door frame.

It is further to be understood that the spoiler is also effective when applied to a center pillar.

Obviously, many variations and modifications of the present invention are possible in light of the above

6

teachings. It is, therefore, to be understood that within the scope of the appended claims, the invention may be practiced otherwise than as specifically described.

Claims

1. A vehicle body characterized in that it comprises a hinge pillar (3, 4, 6, 7) and a door frame (8) arranged side-by-side longitudinally of the vehicle body with the door frame (8) positioned rearward of the hinge pillar (3, 4, 6, 7), and a spoiler (85, 85a, 85b) mounted to said door frame (8) in a manner to project outward in the transverse direction of the vehicle body.

2. A vehicle body as set forth in claim 1, characterized in that said hinge pillar (3, 4, 6, 7) has a portion (61) which projects transversely of the vehicle body more outward than said door frame (8).

3. A vehicle body as set forth in claim 1 or 2, characterized in that said spoiler (85, 85a, 85b) defines a protrusion (84, 84b) which projects transversely of the vehicle body more outward than said hinge pillar (3, 4, 6, 7).

4. A vehicle body as set forth in claim 3, characterized in that it further comprises a door weatherstrip (81) mounted to said door frame (8), in which said hinge pillar (3, 4, 6, 7) has a stepped portion (11) upon which said door weatherstrip (81) abuts to provide a door seal and in which said protrusion (84, 84b) is positioned rearward of the place (12) where the door weatherstrip (81) is brought into abutting engagement with the stepped portion (11).

5. A vehicle body as set forth in claim 3, characterized in that said protrusion (84) is positioned at the rear end of said door frame (8) referred to the direction of travel.

6. A vehicle body as set forth in claim 3, characterized in that said protrusion (84b) is positioned at substantially the middle of said door frame (8) referred to the longitudinal direction of the vehicle body.

7. A vehicle body as set forth in claim 1, characterized in that said spoiler (85a) is formed integral with said door frame (8).

8. A vehicle body as set forth in claim 1, characterized in that said spoiler (85, 85b) is formed independent from said door frame (8) and constructed and arranged to provide a molding-like appearance.

9. A vehicle body as set forth in claim 1, characterized in that said hinge pillar is a front hinge pillar.

# FIG.1
## PRIOR ART

# FIG.2

# FIG.3

# FIG.4

# FIG.5

European Patent Office

**EUROPEAN SEARCH REPORT**

| | DOCUMENTS CONSIDERED TO BE RELEVANT | | | CLASSIFICATION OF THE APPLICATION (Int. Cl. 3) |
|---|---|---|---|---|
| Category | Citation of document with indication, where appropriate, of relevant passages | Relevant to claim | | |
| A | GB - A - 1 354 428 (PORSCHE)<br><br>---- | | | B 62 D 25/02<br><br>B 26 D 35/00 |

**TECHNICAL FIELDS SEARCHED (Int.Cl. 3)**

B 62 D 25/00

B 62 D 35/00

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

X The present search report has been drawn up for all claims

| Place of search | Date of completion of the search | Examiner |
|---|---|---|
| Berlin | 10-05-1982 | LUDWIG |

EPO Form 1503.1   06.78